# DEMANDE DE BREVET EUROPEEN

(11) **EP 2 003 556 A1**
(43) Date de publication de la demande: **17.12.2008**
(21) Numéro de dépôt: 07301066.2
(22) Date de dépôt: 25.05.2007
(51) Int. Cl.: G06F 9/48

(54) **Procédé de traitement par un dispositif électronique portable de commandes applicatives issues de canaux physiques, dispositif et système correspondants**

(71) Demandeur: Axalto S.A., 92190 Meudon (FR)
(72) Inventeur: Appe, Xavier c/o AXALTO SA, DPI, 92190 MEUDON (FR); Quatravaux, Fabien c/o AXALTO SA. DPI,, 92190 MEUDON (FR)

(57) **Abrégé**

L'invention concerne un procédé (30) de traitement, par un dispositif électronique portable, d'au moins deux commandes applicatives respectivement issues d'au moins deux canaux physiques de communication. Selon l'invention, le procédé comporte les étapes de réception (32, 38) de chaque commande applicative issue de l'un des canaux physiques de communication, de détermination (34, 310) d'un niveau de priorité associé à chacune des commandes applicatives, de comparaison (312) des niveaux de priorité et de détermination de la commande applicative la plus prioritaire entre les commandes applicatives, de traitement (314) de la commande applicative la plus prioritaire. L'invention concerne également le dispositif électronique portable et un système électronique comportant un dispositif hôte coopérant avec un tel dispositif électronique portable.

## Description

### Domaine technique de l'invention :

L'invention concerne, d'une façon générale, un procédé de traitement, par un dispositif électronique portable, d'au moins deux commandes applicatives respectivement issues d'au moins deux canaux physiques de communication.

L'invention porte également sur un dispositif électronique portable et un système électronique comportant un dispositif hôte coopérant avec un tel dispositif électronique portable.

### Etat de la technique :

Par dispositif électronique portable, il faut comprendre tout dispositif comportant des moyens de traitement et de communication d'information et destiné à échanger des données avec l'extérieur. Typiquement, un dispositif électronique portable peut se présenter sous la forme d'une carte à puce, telle que par exemple une carte SIM (acronyme pour « Subscriber Identity Module » en langue anglaise), comprenant au moins un microprocesseur, au moins deux interfaces de communication et au moins une mémoire. Chaque interface de communication s'occupe d'une communication au travers d'un canal physique de communication associé.

Le dispositif électronique portable peut coopérer avec un dispositif hôte, afin de pouvoir exploiter, au moins en partie, une ou plusieurs applications supportées par le dispositif électronique portable au travers du dispositif hôte.

Le dispositif hôte peut être notamment un téléphone portable, un assistant personnel numérique ou PDA (acronyme pour « Personal Digital Assistant » en langue anglaise), et/ou un ordinateur personnel ou PC (acronyme pour « Personal Computer » en langue anglaise). Le dispositif hôte peut être relié, par ondes radiofréquences, à un ou plusieurs réseaux de radiocommunication, et/ou à un réseau filaire. A titre d'exemple, en tant que réseau filaire, il peut s'agir d'un réseau de type Internet. En tant que réseau(x) de radiocommunication, il peut s'agir d'un réseau de radiotéléphonie, et/ou d'un réseau de terminaux lecteurs sans contact, utilisés, par exemple, pour des services de transport de type Bus et/ou Métropolitain.

Il est connu de transmettre, depuis un téléphone portable, à une carte à puce, via un canal physique de communication de type ISO (acronyme pour « International Organization for Stansardization » en langue anglaise) 7816 dit à contact, une ou plusieurs commandes applicatives, au moyen d'unités de données de protocole applicatifs ou APDU (acronyme pour « Application Protocol Data Unit » en langue anglaise). La carte à puce traite la ou des commandes applicatives issues du canal physique ISO 7816 dans leur ordre de réception. Puis, la carte à puce transmet, en retour, via le même canal physique" au moyen d'APDU, au téléphone portable, une réponse correspondante.

Il est également connu de transmettre, depuis un terminal lecteur sans contact, à une carte à puce, via un canal physique de communication de type ISO 14 443 dit sans contact, une ou plusieurs commandes applicatives au moyen d'APDU. Il peut, par exemple, s'agir d'une commande pour accéder à une zone d'accès restreint. La carte à puce traite la commande issue du canal physique ISO 14 443 et envoie une réponse, en retour, autorisant ou non un accès à la zone d'accès restreint au porteur de la carte.

Il est encore connu de transmettre, depuis un terminal, tel un PC, à une carte à puce, au travers de plusieurs canaux physiques de communication, par exemple l'un de type ISO 7816 à contact, et au moins un autre de type USB (acronyme « Universal Serial Bus » en langue anglaise). A ce jour, lorsque la carte à puce est accessible via plusieurs canaux physiques de communication, la ou les commandes applicatives d'un seul canal physique de communication est traité à un instant donné. Ainsi, la carte à puce traite des commandes applicatives issues de différents canaux physiques de communication dans leur ordre d'arrivée.

Cependant, une telle solution connue présente un inconvénient majeur. En effet, lorsque la carte à puce reçoit une série de commandes applicatives provenant de différents canaux physiques, les commandes applicatives dernièrement reçues sont stockées, et donc mises en attente, pour être traitées séquentiellement, et ce, indépendamment de leur provenance.

Une telle mise en attente de commandes applicatives provenant d'un canal physique nécessitant un temps de réponse prédéterminé relativement court est préjudiciable à la transaction engagée sur le canal physique concerné, puisqu'elle provoque un dépassement (ou « time-out » en langue anglaise) du temps de réponse prédéterminé pour leurs traitements.

A titre d'exemple, une carte à puce coopère, par l'intermédiaire d'un canal physique de type ISO 7816 à contact, avec un téléphone portable connecté à un réseau de radiotéléphonie. Dans l'hypothèse où la carte est en cours de traitement d'une commande, par exemple, d'authentification de l'utilisateur de carte à puce déjà engagée pour une application dite à contact. Lorsque la carte à puce est interrogée par un terminal lecteur, pour une application sans contact dite « Tap&Go » (pour « je valide et je passe » en langue française) pour lui autoriser, par exemple, l'accès à un service de transport, la carte à puce est déjà occupée à traiter la commande d'authentification de l'utilisateur issue du canal physique à contact.

Une telle application sans contact « Tap&Go » connue met en jeu une carte à puce comprise dans un téléphone portable et un terminal lecteur sans contact. Lorsque la carte à puce est approchée du terminal lecteur, une commande de paiement électronique est transmise à la carte à puce, qui répond dans un temps court en débitant le compte de crédit du porteur de carte pour valider la transaction.

La commande « Tap&Go » correspondante n'étant pas traitée dans un temps de réponse prédéterminé (moins d'une seconde) après la transmission de la commande « Tap&Go », la transaction sans contact est alors avortée. Il est alors nécessaire d'attendre la fin du traitement de la commande d'authentification de l'utilisateur, avant de répéter, au moins une nouvelle fois, la transmission, via le canal physique sans contact, de la commande « Tap&Go », pour obtenir son traitement et une réponse correspondante.

### Exposé de l'invention :

L'invention s'affranchit de l'inconvénient majeur précédemment énoncé en fournissant un procédé de traitement, par un dispositif électronique portable, d'au moins deux commandes applicatives respectivement issues d'au moins deux canaux physiques de communication, et un dispositif électronique portable mettant en oeuvre un tel procédé. Selon l'invention, le dispositif électronique portable attribue un niveau de priorité à chaque commande applicative reçue, et traite, en priorité, une série de commande(s) applicative(s) récemment reçue(s) plus prioritaire vis-à-vis d'une autre série de commande(s) applicative(s) en cours de traitement.

Plus particulièrement, l'invention est un procédé de traitement, par un dispositif électronique portable, d'au moins deux commandes applicatives respectivement issues d'au moins deux canaux physiques de communication. Le procédé comporte une étape de réception de chaque commande applicative issue de l'un des canaux physiques de communication, une étape de détermination d'un niveau de priorité associé à chacune des commandes applicatives, une étape de comparaison des niveaux de priorité et une étape de détermination de la commande applicative la plus prioritaire entre les commandes applicatives, une étape de traitement de la commande applicative la plus prioritaire.

Le principe général de l'invention repose donc sur une nouvelle approche où les commandes applicatives ne sont pas traitées selon leur ordre d'arrivée, mais, selon leur ordre de priorité respectif fixé par le dispositif électronique portable, en tant que récepteur des commandes.

Il convient de noter que, du fait de la définition, par le récepteur, de l'ordre de priorité des commandes applicatives reçues, le dispositif électronique portable peut changer l'ordre de leur traitement par rapport à leur ordre d'arrivée.

Par conséquent, un tel changement d'ordre de traitement provoque le traitement d'une commande applicative plus prioritaire que celui initié pour des commandes applicatives en cours mais, cependant moins prioritaires.

On comprend qu'il en résulte un traitement imbriqué entre celui d'une série de commandes applicatives prioritaires et celui d'une série de commandes applicatives moins prioritaires.

Le dispositif électronique portable peut, ainsi, traiter, pratiquement simultanément, plusieurs commandes applicatives provenant respectivement de différents canaux physiques de communication.

De cette manière, notamment lorsque le traitement requis par une commande applicative plus prioritaire que celui en cours nécessite une grande réactivité, le traitement d'une telle commande applicative prioritaire est pris en compte, par le dispositif électronique portable, dès sa première réception. De ce fait, aucun report dans le traitement de la ou des commandes applicatives plus prioritaires n'est généré. Cela entraîne une meilleure réactivité que celle résultant de la solution connue explicitée plus haut.

Contrairement à la solution connue décrite supra, la solution de l'invention évite donc le dépassement d'un temps prédéterminé de réponse pour le traitement de la ou des commandes applicatives prioritaires reçues après des commandes applicatives en cours de traitement tout en étant moins prioritaires. En outre, la solution de l'invention évite également d'engendrer une autre transmission de la ou des mêmes commandes applicatives prioritaires par rapport à celles en cours de traitement.

Selon un autre aspect, l'invention est un dispositif électronique portable apte à traiter au moins deux commandes applicatives respectivement issues d'au moins deux canaux physiques de communication. Le dispositif comprend des moyens de traitement et de communication d'information.

Selon l'invention, les moyens de traitement et de communication d'information sont configurés pour réaliser un moyen de réception de chaque commande applicative issue de l'un des canaux physiques de communication, un moyen de détermination d'un niveau de priorité associé à chacune des commandes applicatives, un moyen de comparaison des niveaux de priorité, un moyen de détermination de la commande applicative la plus prioritaire entre les commandes applicatives, un moyen de traitement de la commande applicative la plus prioritaire.

En tant que dispositif électronique portable, il peut, par exemple, s'agir d'une clef de type USB munie d'au moins une autre interface de communication, telle que, par exemple, une interface sans contact de type ISO 14 443.

L'invention porte, enfin, sur un système électronique comprenant un dispositif hôte coopérant avec le dispositif électronique portable tel que précité.

En tant que dispositif hôte, il peut, par exemple, s'agir d'un PC. En tant que dispositif électronique portable, il peut, par exemple, s'agir d'un « dongle » (ne nécessitant pas de lecteur spécifique pour communiquer avec le PC) muni d'une interface à contact de type ISO 7816 et d'au moins une autre interface de communication, telle que par exemple une interface de type Bluetooth.

### Description des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 présente un système électronique mettant en oeuvre l'invention ;
- la figure 2 illustre un schéma plus détaillé d'un dispositif électronique portable coopérant avec un dispositif hôte du système représenté sur la figure 1 ; et
- la figure 3 présente un organigramme simplifié d'un exemple d'un procédé selon l'invention.

### Description d'un mode de réalisation :

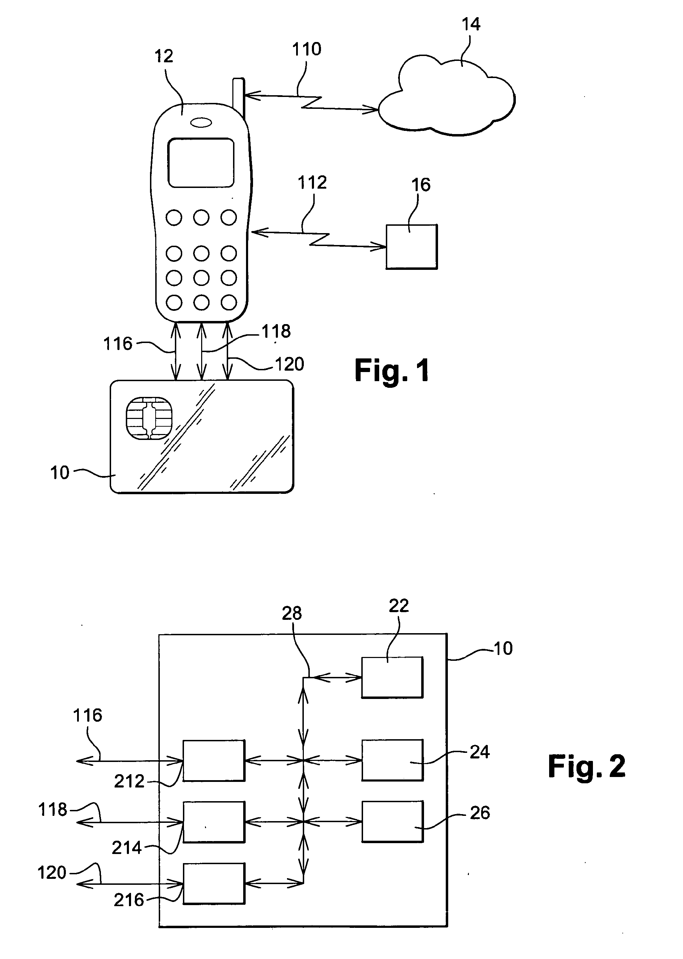

Comme présenté à titre d'exemple sur la figure 1, un système électronique comprend une carte à puce 10 de type SIM amovible et insérée dans un lecteur de carte à puce ménagé au sein du téléphone portable 12.

Le téléphone portable 12, de façon connue en soi, est muni d'un microprocesseur gérant et contrôlant l'ensemble des moyens du téléphone portable, de mémoires volatiles et non volatiles, stockant des données permanentes et temporaires, et d'interfaces pour communiquer avec l'extérieur.

Le téléphone portable 12 est relié, par un lien radiofréquence 110 bi-directionnel, à au moins une station de base d'un réseau radiocommunication 14 de type GSM (acronyme pour « Global System for Mobile Communication »).

La carte à puce 10 coopère avec le téléphone portable 12 pour avoir accès au réseau radio 14 géré par un opérateur de radiotéléphonie. Pour ce faire, le téléphone portable 12 échange des données relatives à des commandes applicatives APDU avec la carte à puce 10 au travers d'un premier canal physique 116 à contact ISO 7816. Le premier canal physique 116 à contact ISO 7816 utilise classiquement six contacts électriques situés sur un côté de la carte à puce 10, et six contacts électriques correspondants au sein du téléphone 12.

La carte à puce 10 coopère également avec le téléphone portable 12, pour accéder à un service de transport au travers d'un terminal lecteur 16 géré par un opérateur de transport. A cette fin, le terminal lecteur 16 transmet au téléphone portable 12, par un lien radiofréquence 112 bi-directionnel, en utilisant une technologie dite NFC (acronyme pour « Near Field Communication » en langue anglaise), une commande de paiement d'un titre de transport.

On rappelle que la technologie NFC est une technologie de courte portée, de 0 à 20 cm, utilisant une fréquence de 13, 56 Mhz.

Le téléphone 12 intègre une puce RFID (acronyme pour « Radio Frequency Identification » en langue anglaise) pour recevoir la commande de paiement du titre de transport et y répondre. Le téléphone 12 retransmet la commande de paiement du titre de transport, à la carte à puce 10, en encapsulant plusieurs commandes APDU au sein d'un protocole de communication HDLC/HCl (acronyme pour « High-level Data Link Control/Host Controler Interface » en langue anglaise). Pour ce faire, un deuxième canal physique 118 à contact SWP (acronyme pour « Single Wire Protocol » en langue anglaise) est exploité. Le deuxième canal physique 118 à contact SWP utilise un unique contact électrique prévu sur la carte à puce 10 et un unique contact électrique correspondant ménagé dans le téléphone 12, pour échanger des données relatives aux commandes APDU.

La carte à puce 10 coopère encore avec le téléphone 12, pour échanger, par l'intermédiaire d'un troisième canal physique 120 de type USB, des données stockées ou à stocker au sein d'une ou plusieurs mémoires de la carte à puce 10. Les données ainsi échangées avec la carte à puce 10 sont également des données relatives à des commandes APDU. Le troisième canal physique 120 USB utilise deux contacts électriques au niveau de la carte à puce 10, ainsi que deux contacts électriques correspondants au niveau du téléphone portable 12.

La carte à puce 10 est accessible, depuis l'extérieur, par l'intermédiaire de trois canaux physiques 116, 118 et 120 de communication.

Il est clair que l'invention ne se limite pas aux seuls canaux physiques de communication décrits ci-dessus et exploités, éventuellement au travers du téléphone 12, par la carte à puce 10, pour échanger des données relatives à des commandes APDU avec l'extérieur de la carte à puce 10. A titre d'exemple, on peut citer :
- un canal physique de type MMC (acronyme pour « Multimedia Card » en langue anglaise) ;
- un canal physique de type I2C (acronyme pour « Inter Integrated Circuit » en langue anglaise) ;
- un canal physique de type IEEE 802.11 (acronyme pour « Institute of Electrical&Electronics Engineers » en langue anglaise) ;
- un canal physique de type Bluetooth ; et/ou
- un canal physique de type Zigbee.

Selon l'invention, pour traiter des commandes APDU provenant respectivement de divers canaux physiques, qui peuvent être concurrentielles dans leur traitement, la carte à puce 10 définit un niveau de priorité propre à chaque commande applicative d'une série de commandes, et traite au moins en partie chaque commande APDU de la série de commandes selon son niveau de priorité.

Il est à noter qu'une série de commandes peut être constituée d'une seule commande APDU.

La carte à puce 10, ayant initié le traitement d'une première commande APDU d'abord reçue et d'un niveau de priorité inférieur à celui d'une deuxième commande APDU reçue ensuite, donne, après comparaison de leurs niveaux de priorité respectifs et détermination du niveau de priorité le plus élevé des deux, la priorité au traitement de la commande APDU la plus prioritaire.

Selon un mode de réalisation, le niveau de priorité le plus élevé est celui qui a la valeur la plus élevée. Par exemple, s'il y a quatre types de commandes APDU, le niveau de priorité le plus prioritaire est la valeur « 4 », où le niveau de priorité le moins prioritaire est la valeur « 1 ».

Inversement, selon un autre mode de réalisation, le niveau de priorité le plus élevé est celui qui a la valeur la plus faible. Par exemple, s'il y a quatre types de commandes APDU, le niveau de priorité le plus prioritaire est la valeur « 1 », où le niveau de priorité le moins prioritaire est la valeur « 4 ».

Le niveau de priorité est défini selon un ou plusieurs paramètres.

Selon une caractéristique avantageuse, le niveau de priorité d'une commande APDU est fonction du canal physique à travers lequel la commande APDU a été reçue par la carte à puce 10.

La figure 2 montre, de manière plus détaillée, un mode de réalisation de la carte à puce 10 destinée à échanger des données relatives à des commandes APDU avec l'extérieur.

La carte à puce 10 est doté d'un microprocesseur 22 gérant et contrôlant notamment l'ensemble des moyens de la carte à puce 10 échangeant, en interne, des données, entre eux, au travers d'un bus bi-directionnel 28. Le microprocesseur 22 gère et contrôle également l'ensemble des données relatives aux commandes APDU reçues de l'extérieur.

Pour échanger des données relatives aux commandes APDU avec l'extérieur, la carte à puce 10 est munie :
- d'une première interface 212 de type ISO 7816, pour communiquer en contact, via le premier canal physique 116 avec le téléphone 12 ;
- d'une deuxième interface 214 de type SWP, pour communiquer en contact, via le deuxième canal physique 118 avec le téléphone 12 ; et
- d'une troisième interface 216 de type USB, pour communiquer en contact, via le troisième canal physique 120 avec le téléphone 12.

La carte à puce 10 est équipée d'une mémoire 24 volatile et d'une mémoire 26 non volatile, permettant de stocker des données temporaires et permanentes respectivement. Il s'agit de données propres notamment à un système d'exploitation qui gère les ressources matériel et logiciel de la carte à puce 10, et différents programmes qui sont nécessaires au fonctionnement interne de la carte à puce 10. En outre, les mémoires 24 volatile et 26 non volatile stockent des données propres à différentes applications fournies par la carte à puce 10.

Comme applications, entre autres, la carte à puce 10 dispose des applications connues d'identification d'utilisateur, d'authentification d'utilisateur, d'accès à un service de transport, d'accès à une zone d'accès restreint, de paiement électronique...

Selon l'invention, le système d'exploitation intègre un module logiciel qui attribue un niveau de priorité à chaque série de commande(s) applicative(s) reçue(s) pour décider soit de son (leur) traitement immédiat soit d'un traitement retardé, en fonction de son(leur) niveau de priorité par rapport à une autre série de commande(s) applicative(s) en cours de traitement.

L'attribution du niveau de priorité dépend, de manière optionnelle, d'une temporisation de priorité associée à un canal physique moins prioritaire, sur lequel est attribué un temps de réponse après la transmission d'une commande APDU.

Le module logiciel comprend un programme d'instructions de définition du niveau de priorité des commandes APDU pour l'ensemble des canaux physiques à travers lesquels la carte à puce est accessible. Un tel programme de définition est, par exemple, chargé dès la personnalisation en usine de la carte à puce 10 et régulièrement mis à jour après sa livraison, par exemple OTA pour « Over The Air » éventuellement lors d'une mise à jour de chaque nouvelle application à fournir par la carte à puce 10.

De la sorte, la carte à puce 10 traite des commandes APDU reçues de manière quasi-simultanée, dans l'ordre décroissant de leur niveau de priorité, c'est-à-dire depuis les commandes APDU les plus prioritaires vers celles les moins prioritaires.

On rappelle qu'un microprocesseur unique, traitant une seule tâche à la fois, commute, grâce à un ordonnanceur de tâches, entre différents fils d'exécution pour les exécuter ou traiter l'un après l'autre. Un tel microprocesseur est qualifié de multi-fils d'exécution (ou « multi execution thread » en langue anglaise) par répartition temporelle.

Selon un premier mode de réalisation, le système d'exploitation est multi-fils d'exécution, où un fil d'exécution est dédié pour la communication de données relatives à des commandes APDU pour chaque canal physique de communication, et un fil d'exécution est dédié au traitement des commandes APDU dans l'ordre fixé par l'ordonnanceur.

Chaque fil d'exécution de communication de données relatives à des commandes APDU traite de la réception de commande APDU et de la transmission d'une réponse correspondante au travers du canal physique concerné.

Dès qu'un des fils d'exécution de communication est averti de la réception d'une commande APDU, ce fil d'exécution envoie, un message spécifique, via l'ordonnanceur, au fil d'exécution de traitement des commandes APDU indiquant qu'une commande est prête pour être traitée.

Pour avertir un fil d'exécution de communication d'un canal physique donné de la réception d'une commande APDU sur le canal concerné, une interruption est générée, qui enregistre les données associées et transmet un message idoine pour réveiller le fil d'exécution de communication en charge de ce canal.

A son tour, le fil d'exécution de communication du canal physique concerné réveillé, traite le message, et le fait suivre au fil d'exécution de traitement des commandes APDU, qui se charge d'exécuter la commande APDU reçue sous le contrôle de l'ordonnanceur.

L'ordonnanceur obéit à l'ordre fixé par le niveau de priorité des commandes APDU.

Lorsque le fil d'exécution de traitement des commandes APDU est informé, il détermine le niveau de priorité de la commande qu'il vient de recevoir, et s'il n'exécute ou ne traite aucune commande APDU, alors il traite immédiatement la commande APDU dernièrement reçue.

Si, au contraire, le fil d'exécution de traitement des commandes APDU est déjà occupé à traiter une autre commande APDU dont il connaît le niveau de priorité et qu'il est informé qu'une commande APDU dernièrement reçue est également prête à être traitée, alors il compare, entre eux, les niveaux de priorité, et détermine le niveau de priorité le plus prioritaire. Si la commande APDU en cours de traitement est plus prioritaire que celle dernièrement reçue, alors le fil d'exécution de traitement des commandes APDU continue et termine le traitement en cours avant de passer au traitement de la commande APDU dernièrement reçue. L'ordre de sortie des réponses relatives aux commandes APDU reçues correspond à l'ordre d'entrée des commandes APDU.

Si, au contraire, la commande APDU dernièrement reçue est plus prioritaire que celle en cours de traitement, alors le fil d'exécution termine le traitement de la commande en cours et les données résultant de ce traitement sont sauvegardées, puis l'ordonnanceur intervient pour que le fil d'exécution de traitement des commandes APDU traite la commande APDU plus prioritaire dernièrement reçue. De la sorte, le traitement d'éventuelles commandes APDU issues du même canal physique que celle en cours qui suivent la commande APDU dernièrement traitée est reporté à la fin du traitement de la commande APDU plus prioritaire. Pour reprendre le traitement de la ou des commandes APDU qui suivent celui initié pour la commande APDU traitée en premier, les données sauvegardées sont récupérées, afin d'éviter toute incohérence de traitement. L'ordre de sortie des réponses relatives aux commandes APDU reçues correspond donc à l'ordre inverse de l'ordre d'entrée des commandes APDU.

Selon un deuxième mode de réalisation, le système d'exploitation est multi-fils d'exécution, où un fil d'exécution est dédié pour la communication de données relatives à des commandes APDU pour l'ensemble des canaux physiques de communication, et un fil d'exécution est dédié au traitement des commandes APDU dans l'ordre fixé par l'ordonnanceur.

Le deuxième mode de réalisation est identique au premier mode explicité précédemment, à l'exception du qu'un seul et même fil d'exécution de communication dédié pour tous les canaux physiques (et non plusieurs) s'adresse, sous le contrôle de l'ordonnanceur, au fil d'exécution de traitement des commandes APDU.

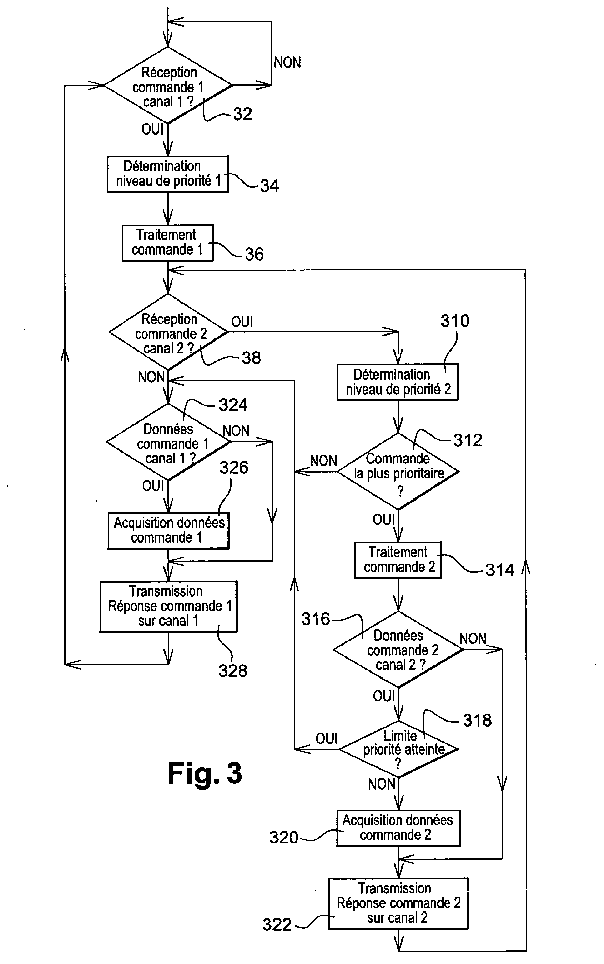

La figure 3 montre, sous forme d'organigramme, un exemple de procédé de traitement par la carte à puce 10, de plusieurs commandes APDU respectivement reçues de deux canaux physiques de communication.

Le traitement des commandes APDU fonctionne comme un serveur APDU.

L'organigramme débute par une boucle 32 d'attente de réception d'une commande APDU au travers d'un canal des deux canaux physiques 116 à contact ISO 7816 et 118 HCl.

Une fois qu'une première commande APDU a été reçue, la carte à puce 10 détermine 34 le niveau de priorité attribué au traitement de la série de commandes APDU issues du canal physique concerné.

La carte à puce 10 commence 36 le traitement de la première commande APDU. La première commande APDU est éventuellement suivie d'au moins une autre commande APDU issue du même canal physique.

A tout instant, une autre commande APDU, dite deuxième commande APDU peut être reçue, suite au mécanisme d'interruption explicitée plus haut en relation avec la figure 2.

On vérifie 38 si une deuxième commande APDU a été reçue par l'intermédiaire du deuxième canal.

Si une deuxième commande APDU est reçue via le deuxième canal, on passe à une étape 310 de détermination du niveau de priorité de la deuxième commande APDU.

Sinon, c'est-à-dire si aucune commande APDU n'est reçue d'un autre canal physique, on passe à une étape 324 pour continuer à traiter la première commande APDU relative au premier canal.

Au cours de l'étape 324, on teste si des données relatives à la première commande APDU doivent suivre en fonction de la nature de la première commande APDU.

Ensuite, la carte à puce détermine 312 si la deuxième commande APDU du deuxième canal est plus prioritaire que la première commande APDU du premier canal.

Si la deuxième commande APDU suivie éventuellement d'autre(s) commande(s) APDU sur le deuxième canal n'est pas prioritaire vis-à-vis de la première commande APDU relative au premier canal, on passe à l'étape 324 précitée relative au traitement de la première commande APDU relative au premier canal.

Si la deuxième commande APDU relative au deuxième canal est prioritaire pour son traitement vis-à-vis de celui de la première commande APDU relative au premier canal, la carte à puce commence 314 à traiter la deuxième commande APDU relative au deuxième canal.

Ensuite, la carte à puce vérifie 316 si des données propres à la deuxième commande (relative au deuxième canal) reçue sont à recevoir selon la nature de la deuxième commande APDU issue du deuxième canal à traiter en priorité.

Si de telles données relatives à la deuxième commande sont à recevoir, la carte à puce teste 318 si une limite de priorité du deuxième canal a été atteinte.

Selon une caractéristique optionnelle, une limite de priorité est définie pour chaque canal physique accédant à la carte à puce. La limite de priorité est déterminée par un nombre prédéterminé de commandes APDU du deuxième canal physique dont le traitement est plus prioritaire par rapport à celui des commandes APDU relatifs au premier canal physique dont le traitement a commencé.

Selon une variante, la limite de priorité est déterminée par une période de temps pendant laquelle le traitement de la série de commandes applicatives relative au deuxième canal est plus prioritaire que celui de la série de commandes applicatives relative au premier canal dont le traitement a débuté.

Selon une autre variante, le deuxième canal physique devient le canal physique le moins prioritaire pendant le traitement d'un nombre prédéterminé de commandes applicatives relatives au premier canal physique.

Selon une autre variante, le deuxième canal physique devient le canal physique le moins prioritaire pendant une durée prédéterminée.

Si la limite de priorité n'a pas été atteinte, on passe à une étape 320 d'acquisition des données relatives à la deuxième commande APDU issue du deuxième canal plus prioritaire.

Si, au contraire, la limite de priorité a été atteinte, on reboucle juste en amont de l'étape 324 de vérification de présence de données relatives au traitement de commande APDU du premier canal.

Au cours de l'étape 320 d'acquisition, les données propres à la deuxième commande provenant du deuxième canal plus prioritaire sont récupérées.

Si aucune donnée paramétrant la deuxième commande APDU relative au deuxième canal n'est à attendre, on saute depuis l'étape 316 indiquée plus haut à une étape 322 suivante de transmission d'une réponse à la deuxième commande APDU.

La carte à puce transmet 322, via le deuxième canal physique, une réponse à la deuxième commande APDU qu'il a reçu via ce même canal.

La carte à puce répète le traitement de toute commande APDU issue du deuxième canal le plus prioritaire tant que l'éventuelle limite de priorité n'a pas été atteinte. Pour ce faire, on effectue, à nouveau, pour chacune des commandes APDU de la série de commandes APDU du deuxième canal, les étapes 38 de test de réception d'une nouvelle deuxième commande APDU relative au deuxième canal, 310 de détermination du niveau de priorité y associé, 312 de comparaison et de détermination du canal le plus prioritaire, 314 de traitement de la deuxième commande APDU, 316 de test d'attente de données, 318 de test d'atteinte de limite de priorité, 320 d'acquisition des données y relatives et 322 de transmission d'une réponse correspondante.

Une fois qu'une réponse correspondante a été transmise pour chaque commande APDU issue du deuxième canal, la carte à puce bascule sur le traitement initié préalablement de la série de commandes applicatives. Pour ce faire, la carte à puce repasse à l'étape 324 de vérification de présence de données relatives à la commande APDU de la première série de commandes APDU relative au premier canal.

Si aucune donnée ne paramètre la commande APDU issue du premier canal n'est à attendre, alors la carte à puce passe à une étape 328 de transmission d'une réponse à la commande APDU transmise via le premier canal.

Si des données relatives à la première commande APDU sont à attendre, du fait de la nature de la commande APDU concernée, la carte à puce reçoit 326 les données correspondantes paramétrant la commande APDU relative au premier canal.

Le cas échéant, la carte à puce après avoir transmis une réponse à la première commande APDU relative au premier canal via le premier canal reboucle à l'étape 32 initiale d'attente de réception d'une autre première commande APDU sur le premier canal.

Une fois que chaque commande APDU de la série de commandes APDU reçue via le deuxième canal, au moins une partie d'entre elles du fait de la limite de priorité fixée pour le traitement du deuxième canal, et chaque commande de la série de commandes APDU reçue via le premier canal ont donné à une réponse correspondante transmise sur son canal respectif, le traitement des commandes APDU reçues est terminé jusqu'à une prochaine réception d'une commande sur le premier ou deuxième canal physique.

Le procédé décrit ci-dessus concerne uniquement deux canaux physiques de communication.

Il est clair que l'homme du métier est capable, sans faire preuve d'activité inventive, d'implémenter le procédé décrit sur un nombre de canaux physiques supérieur à deux.

Pour illustrer le procédé décrit supra, on l'applique au premier canal physique 116 à contact ISO 7816 et le deuxième canal physique 118 SWP, utilisant le protocole de communication HCl au niveau applicatif.

On rappelle qu'une commande APDU issue du premier canal physique ISO 7816 comporte un en-tête (ou « header » en langue anglaise) définissant la nature de la commande, reçue dans un premier temps, suivie, dans un deuxième temps, des données de paramètre de la commande. Une telle commande APDU issue du premier canal physique ISO 7816 est reçue en deux parties séparées de données.

On rappelle qu'une commande APDU issue du deuxième canal physique HCl comporte un en-tête définissant également la nature de la commande suivie, dans le même temps, des données de paramètre de la commande.

Une telle commande APDU issue du deuxième canal physique ISO 7816 est reçue en un seul et même bloc de données.

La carte à puce a défini que le traitement des commandes APDU issues du canal physique HCl est prioritaire sur celui des commandes APDU issues du canal physique ISO 7816.

Pour ce faire, chaque commande APDU du canal physique HCl a une valeur de priorité de 2, tandis que chaque commande APDU du canal physique ISO 7816 a une valeur de priorité de 1.

La carte à puce reçoit, dans un premier temps, une première commande APDU via le canal physique ISO 7816, qu'elle commence à traiter. La première commande APDU est, par exemple, une unique commande de vérification du code d'identification personnel ou PIN (ou « verify PIN » en langue anglaise) d'une série de commandes transmise via le canal ISO 7816 et reçue par la carte à puce.

Auparavant, l'utilisateur de la carte à puce a lancé une application demandant l'authentification du porteur de la carte. L'utilisateur a entré alors un nombre devant correspondre avec celui transmis par le lecteur ISO 7816 dans les données de paramètres de la commande. Une telle entrée du nombre a provoqué la transmission par le lecteur au travers du canal physique ISO 7816 de la première commande APDU de vérification du code d'identification personnel.

La carte à puce reçoit, dans un deuxième temps, une deuxième commande APDU.

La deuxième commande APDU est constituée par la commande de sélection d'un fichier intitulé « titre de transport » (ou SelectFile) où « titre de transport » constitue les données de paramètre de cette commande. La deuxième commande APDU est, par exemple, la première commande APDU d'une série de trois commandes APDU à traiter pour le deuxième canal physique HCl.

La carte à puce, après comparaison des niveaux de priorité relatifs aux commandes APDU reçues des premier et deuxième canaux, constate qu'elle doit traiter, en priorité les commandes APDU issue du deuxième canal.

La carte à puce exécute, d'abord, la première commande APDU qu'elle a reçu au sein d'un en-tête.

Puis, la carte à puce traite la commande de sélection du fichier « titre de transport » relative au canal physique utilisant la protocole HCl. Une fois exécutée, la carte transmet, via le deuxième canal SWP, une réponse, en retour, par un message « OK », confirmant qu'elle a effectivement traitée la commande de sélection du fichier qu'elle a reconnue puis traitée.

Ensuite, la carte à puce reçoit, via le deuxième canal, une autre commande issue via le deuxième canal prioritaire, constituée par la commande de lecture de fichier (ou « readfile »). La carte à puce transmet, une réponse, via le deuxième canal SWP, qu'il reste un compte de « 3 unités » dans le fichier sélectionné.

Puis, la carte reçoit une autre commande sur le deuxième canal, constituée par la commande d'écriture de « 2 unités » dans le fichier sélectionné, pour poursuivre la transaction sans contact.

La carte transmet, sur le deuxième canal physique SWP, une réponse, constituée par un message « OK », confirmant qu'elle a effectivement exécuté la commande d'écriture dernièrement traitée, et supprimer une unité de crédit, validant un ticket de transport.

Entre temps, à chaque période d'attente depuis le début de traitement des commandes APDU relatives au deuxième canal HCl plus prioritaire, la carte à puce transmet au moins une commande d'attente sur le canal physique ISO 7816 pour reporter la transmission, en l'occurrence, des données relatives à la première commande APDU de vérification du code d'identification personnel.

Ensuite, une fois que les trois commandes APDU reçues sur le canal physique SWP ont bien été traitées, la carte à puce peut revenir au traitement de la deuxième partie de la première commande APDU reçue sur le canal physique ISO 7816.

La carte à puce bascule pour traiter celles relatives au premier canal physique ISO 7816 et traite de l'unique commande en cours sur le canal physique ISO 7816.

La carte à puce transmet, sur le premier canal physique ISO 7816, une réponse, constituée par un message « OK », confirmant qu'elle a effectivement exécuté la commande de vérification du code d'identification personnel.

La carte à puce reçoit, via le premier canal physique ISO 7816, alors la deuxième partie de la commande de vérification du code d'identification personnel constituée par les données la paramétrant.

La carte à puce traite alors les données de la commande de vérification du code d'identification personnel.

Si les données reçues correspondent à celles entrées par l'utilisateur en tant que code PIN, alors la carte à puce transmet, en réponse, via le premier canal physique ISO 7816, un message « OK », confirmant qu'il s'agit du bon code d'identification personnel.

## Revendications

1. Procédé (30) de traitement, par un dispositif électronique portable, d'au moins deux commandes applicatives respectivement issues d'au moins deux canaux physiques de communication,
**caractérisé en ce que** le procédé comporte les étapes de :
- réception (32, 38) de chaque commande applicative issue de l'un des canaux physiques de communication,
- détermination (34, 310) d'un niveau de priorité associé à chacune des commandes applicatives,
- comparaison (312) des niveaux de priorité et détermination de la commande applicative la plus prioritaire entre les commandes applicatives,
- traitement (314) de la commande applicative la plus prioritaire.

2. Procédé selon la revendication 1, dans lequel la détermination du niveau de priorité d'une commande applicative dépend du canal physique ayant fourni la commande applicative.

3. Procédé selon la revendication 2, dans lequel, suite au traitement d'un premier nombre prédéterminé de commandes applicatives provenant du canal physique le plus prioritaire, le canal physique le plus prioritaire devient le moins prioritaire pendant le traitement d'un deuxième nombre prédéterminé de commandes applicatives.

4. Procédé selon la revendication 2, dans lequel, suite au traitement d'un premier nombre prédéterminé de commandes applicatives provenant du canal physique le plus prioritaire, le canal physique le plus prioritaire devient le moins prioritaire pendant une première durée prédéterminée.

5. Procédé selon la revendication 2, dans lequel la détermination du niveau de priorité dépend, en outre, d'une temporisation de priorité associée à un canal physique.

6. Procédé selon l'une des revendications 2 à 5, dans lequel, à réception d'une commande applicative dont le niveau de priorité dépend du canal physique ayant fourni la commande applicative, ledit canal physique correspond au canal physique le plus prioritaire pendant un nombre prédéterminé de commandes applicatives.

7. Procédé selon l'une des revendications 2 à 5, dans lequel, à réception d'une commande applicative dont le niveau de priorité dépend du canal physique ayant fourni la commande applicative, ledit canal physique correspond au canal le plus prioritaire pendant une deuxième durée prédéterminée.

8. Procédé selon l'une des revendications 2 à 7, dans lequel, à réception d'une commande applicative ayant un niveau de priorité supérieur au niveau de priorité d'une commande applicative en cours de traitement, la commande applicative la moins prioritaire en cours de traitement est traitée, le traitement d'au moins une commande applicative ultérieure la moins prioritaire est suspendu et la commande applicative la plus prioritaire reçue est traitée immédiatement.

9. Procédé selon la revendication 8, dans lequel l'étape de suspension du traitement d'au moins une commande applicative ultérieure la moins prioritaire comprend une étape de transmission d'au moins une commande d'attente sur le canal physique associé à ladite commande applicative ultérieure la moins prioritaire.

10. Procédé selon l'une des revendications 1 à 9, dans lequel les commandes applicatives sont relatives à au moins une application fournie par ledit dispositif électronique portable, ladite application étant comprise au sein de la liste suivante :
- une application d'identification d'utilisateur ou de porteur ;
- une application d'authentification d'utilisateur ;
- une application d'accès à une zone d'accès restreint ou à un service de transport ;
- une application de paiement électronique ;
- une application de communication à un réseau de radiotéléphonie.

11. Dispositif (10) électronique portable apte à traiter au moins deux commandes applicatives respectivement issues d'au moins deux canaux physiques de communication, le dispositif comprenant des moyens (22) de traitement et de communication d'information,
**caractérisé en ce que** les moyens (22) de traitement et de communication d'information sont configurés pour réaliser :
- un moyen de réception de chaque commande applicative issue de l'un des canaux physiques de communication,
- un moyen de détermination d'un niveau de priorité associé à chacune des commandes applicatives,
- un moyen de comparaison des niveaux de priorité ;
- un moyen de détermination de la commande applicative la plus prioritaire entre les commandes applicatives,
- un moyen de traitement de la commande applicative la plus prioritaire.

12. Dispositif selon la revendication 11, dans lequel le niveau de priorité d'une commande applicative dépend du canal physique ayant fourni la commande applicative.

13. Dispositif selon la revendication 12, dans lequel le moyen de traitement traite :
- un premier nombre prédéterminé de commandes applicatives provenant du canal physique le plus prioritaire,
- un deuxième nombre prédéterminé de commandes applicatives provenant d'un canal physique moins prioritaire.

14. Dispositif selon la revendication 12, dans lequel, le moyen de traitement traite :
- un premier nombre prédéterminé de commandes applicatives provenant du canal physique le plus prioritaire,
- au moins une commande applicative provenant d'un canal physique moins prioritaire pendant une première durée prédéterminée.

15. Dispositif selon la revendication 12, dans lequel le niveau de priorité dépend, en outre, d'une temporisation de priorité associée à un canal physique.

16. Dispositif selon l'une des revendications 12 à 15, dans lequel, à réception d'une commande applicative dont le niveau de priorité dépend du canal physique ayant fourni la commande applicative, ledit canal physique correspond au canal physique le plus prioritaire pendant un nombre prédéterminé de commandes applicatives.

17. Dispositif selon l'une des revendications 12 à 15, dans lequel, à réception d'une commande applicative dont le niveau de priorité dépend du canal physique ayant fourni la commande applicative, ledit canal physique correspond au canal le plus prioritaire pendant une deuxième durée prédéterminée.

18. Dispositif selon l'une des revendications 12 à 17, dans lequel, à réception d'une commande applicative ayant un niveau de priorité supérieur au niveau de priorité d'une commande applicative en cours de traitement, le moyen de traitement traite la commande applicative la moins prioritaire en cours de traitement, suspend le traitement d'au moins une commande applicative ultérieure la moins prioritaire et traite immédiatement la commande applicative la plus prioritaire.

19. Dispositif selon la revendication 18, dans lequel, pendant la suspension du traitement d'au moins une commande applicative ultérieure la moins prioritaire, les moyens de traitement et de communication d'information sont configurés pour réaliser un moyen de transmission d'au moins une commande d'attente sur le canal physique associé à ladite commande applicative ultérieure la moins prioritaire.

20. Dispositif selon l'une des revendications 11 à 19, dans lequel les commandes applicatives sont relatives à au moins une application fournie par ledit dispositif électronique portable, ladite application étant comprise au sein de la liste suivante :
- une application d'identification d'utilisateur ou de porteur ;
- une application d'authentification d'utilisateur ;
- une application d'accès à une zone d'accès restreint ou à un service de transport ;
- une application de paiement électronique ;
- une application de communication à un réseau de radiotéléphonie.

21. Dispositif selon l'une des revendications 11 à 20, dans lequel les canaux physiques sont compris au sein de la liste suivante :
- un canal de communication de type ISO 7816;
- un canal de communication de type USB ;
- un canal de communication de type MMC ;
- un canal de communication sans contact de type ISO 14 443 ;
- un canal de communication de type SWP.

22. Système électronique comprenant un dispositif (12) hôte coopérant avec au moins un dispositif (10) électronique portable pour traiter au moins deux commandes applicatives respectivement issues d'au moins deux canaux physiques de communication avec l'extérieur du dispositif, le dispositif comprenant des moyens (22) de traitement et de communication d'information,
**caractérisé en ce que** les moyens (22) de traitement et de communication d'information sont configurés pour réaliser :
- un moyen de réception de chaque commande applicative issue de l'un des canaux physiques de communication,
- un moyen de détermination d'un niveau de priorité associé à chacune des commandes applicatives,
- un moyen de comparaison des niveaux de priorité ;
- un moyen de détermination de la commande applicative la plus prioritaire entre les commandes applicatives,
- un moyen de traitement de la commande applicative la plus prioritaire.

23. Système selon la revendication 22, dans lequel le niveau de priorité d'une commande applicative dépend du canal physique ayant fourni la commande applicative.

24. Système selon la revendication 23, dans lequel le moyen de traitement traite :
- un premier nombre prédéterminé de commandes applicatives provenant du canal physique le plus prioritaire,
- un deuxième nombre prédéterminé de commandes applicatives provenant d'un canal physique moins prioritaire.

25. Système selon la revendication 23, dans lequel le moyen de traitement traite :
- un premier nombre prédéterminé de commandes applicatives provenant du canal physique le plus prioritaire,
- au moins une commande applicative provenant d'un canal physique moins prioritaire pendant une première durée prédéterminée.

26. Système selon la revendication 23, dans lequel le niveau de priorité dépend, en outre, d'une temporisation de priorité associée à un canal physique.

27. Système selon l'une des revendications 23 à 26, dans lequel, à réception d'une commande applicative dont le niveau de priorité dépend du canal physique ayant fourni la commande applicative, ledit canal physique correspond au canal physique le plus prioritaire pendant un nombre prédéterminé de commandes applicatives.

28. Système selon l'une des revendications 23 à 27, dans lequel, à réception d'une commande applicative dont le niveau de priorité dépend du canal physique ayant fourni la commande applicative, ledit canal physique correspond au canal le plus prioritaire pendant une deuxième durée prédéterminée.

29. Système selon l'une des revendications 23 à 28, dans lequel, à réception d'une commande applicative ayant un niveau de priorité supérieur au niveau de priorité d'une commande applicative en cours de traitement, le moyen de traitement traite la commande applicative la moins prioritaire en cours de traitement, suspend le traitement d'au moins une commande applicative ultérieure la moins prioritaire et traite immédiatement la commande applicative la plus prioritaire.

30. Système selon la revendication 29, dans lequel, pendant la suspension du traitement d'au moins une commande applicative ultérieure la moins prioritaire, les moyens de traitement et de communication d'information sont configurés pour réaliser un moyen de transmission d'au moins une commande d'attente sur le canal physique associé à ladite commande applicative ultérieure la moins prioritaire.

31. Système selon l'une des revendications 22 à 30, dans lequel les commandes applicatives sont relatives à au moins une application fournie par ledit dispositif électronique portable, ladite application étant comprise au sein de la liste suivante :
- une application d'identification d'utilisateur ou de porteur ;
- une application d'authentification d'utilisateur ;
- une application d'accès à une zone d'accès restreint ou à un service de transport ;
- une application de paiement électronique ;
- une application de communication à un réseau de radiotéléphonie.

32. Système selon l'une des revendications 22 à 31, dans lequel les canaux physiques sont compris au sein de la liste suivante :
- un canal de communication de type ISO 7816 ;
- un canal de communication de type USB ;
- un canal de communication de type MMC ;
- un canal de communication sans contact de type ISO 14443 ;
- un canal de communication de type 12C ;
- un canal de communication de type SWP ;
- un canal de communication de type IEEE802.11 ;
- un canal de communication de type Bluetooth ;
- un canal de communication de type Zigbee.

33. Système selon l'une des revendications 22 à 32, dans lequel le dispositif hôte est un téléphone (12) portable et le dispositif (10) électronique portable est une carte à puce.
